# EUROPÄISCHE PATENTSCHRIFT

(11) **EP 0 368 183 B1**
(45) Veröffentlichungstag und Bekanntmachung des Hinweises auf die Patenterteilung: **10.03.1993**
(21) Anmeldenummer: 89120446.3
(22) Anmeldetag: 04.11.1989
(51) Int. Cl.: B60R 13/07

(54) **Blende zur Verkleidung des Karosserie-Dachrahmens von Kraftfahrzeugen**
Screen to cover the roof frame of motor vehicles
Plaque de revêtement du cadre de toit de véhicules automobiles

(30) Priorität: 09.11.1988 DE 3837972
(43) Veröffentlichungstag der Anmeldung: 16.05.1990
(73) Patentinhaber: Adam Opel Aktiengesellschaft, 65428 Rüsselsheim (DE)
(72) Erfinder: Warner, Hermann, D-6097 Trebur 1 (DE)
(74) Vertreter: Bergerin, Ralf, Dipl.-Ing.

(56) Entgegenhaltungen:
- DE-A- 3 003 216
- DE-A- 3 614 740

## Beschreibung

Die Erfindung bezieht sich auf eine Blende zur Verkleidung des Karosserie-Dachrahmens von Kraftfahrzeugen in sich an Seitentüren anschließenden, keine Seitentüren aufweisenden Seitenwandbereichen, wobei Fensterrahmen der Seitentüren zugeordnete Teile des Karosserie-Dachrahmens abdeckend übergreifen, siehe z.B. DE-A-3 003 216.

Bei Personenkraftwagen ist es aus ästhetischen wie auch aus strömungstechnischen Gründen üblich, den rinnenartig vertieften Dachrahmenbereich bei geschlossener Seitentür durch den Rahmen des Seitentürfensters dichtend zu übergreifen und nach außen abzudecken. Hierdurch wird eine gleichmäßig gekrümmte Übergangszone von der Seitenwand zum Dachbereich der Karosserie geschaffen.

Ein gewisses Problem ergibt sich bei Seitenwandbereichen, in denen keine Seitentüren vorgesehen sind. Als Beispiele seien zweitürige Limousinen oder Kombifahrzeuge genannt. Auch hier besteht naturgemäß das Erfordernis, den betreffenden Dachrahmenbereich zu verkleiden, was jedoch nur durch eine separate Blende geschehen kann. Hierbei wird eine kontinuierliche Weiterführung der Konturen angestrebt, welche durch die den zugeordneten Dachrahmenbereich übergreifende (benachbarte) Seitentür vorgegeben sind.

Bekannt sind aufwendig gefertigte, einteilige Stahl- oder Kunststoffblenden, die am Dachrahmen angeschraubt oder angeklipst sind. Zum bekannten Stand der Technik, der sich allerdings, abweichend von der speziellen Problematik der vorliegenden Erfindung, im wesentlichen auf die Abdeckung von Wasserablaufrinnen an der Dachkante von Kraftfahrzeug-Karosserien beschränkt, seien die DE-A-31 47 546, die DE-A-30 03 216 und die DE-U-85 01 516.4 und DE-U-86 04 027.8 genannt.

Aufgabe der Erfindung ist es, Möglichkeiten für eine vielseitige, dabei aber einfache Gestaltung und Befestigung einer Blende der in Rede stehenden Art zu schaffen und zugleich dafür zu sorgen, daß trotz Abdeckung der Wasserablaufrinne eine ungehinderte Anbringung eines Dachlastträgers an der Dachkante ermöglicht wird.

Gemäß der Erfindung wird die Aufgabe bei einer Blende der eingangs bezeichneten Art dadurch gelöst, daß die Blende aus zwei, durch ein Gelenk miteinander verbundenen Teilen, einem unteren und einem oberen Profilteil, besteht, wobei die Gelenkachse parallel zur Längserstreckung des Karosserie-Dachrahmens verläuft, und daß das obere Profilteil 31 klappenartig gegenüber dem unteren Profilteil 30 schwenkbar ist.

Der Vorteil der Erfindung besteht darin, daß die Blende, zwecks Anbringung eines Dachlastträgers, nicht entfernt zu werden braucht, sondern in ihrer Montagestellung verbleiben kann. Es bedarf lediglich eines Wegklappens des oberen Profilteils. Hierdurch ergeben sich einfache Gestaltungs- und Befestigungsmöglichkeiten für die Blende insgesamt.

In diesbezüglich vorteilhafter Weiterbildung der Erfindung wird vorgeschlagen, daß an die insgesamt als Abdeckprofil ausgebildete Blende innenseitig, etwa im rechten Winkel zur Blendenfläche, ein Befestigungsflansch einteilig angeformt ist, der mit am Karosserie-Dachrahmen angeordneten Befestigungsklipsen zusammenwirkt, wobei der Befestigungsflansch zweckmäßigerweise am unteren Profilteil angreift bzw. angeformt ist. Beide Profilteile der Blende, das untere Profilteil einschließlich Befestigungsflansch, können hierbei als Strangpreß-Profil aus Aluminium ausgebildet sein oder aus extrudiertem, formstabilem oder metallverstärktem Kunststoff oder aus einem gerollten Profil bestehen.

Durch die im vorstehenden genannten Herstellungsarten und Werkstoffe ergeben sich einfache und kostengünstige Teile von solider Qualität und hoher Lebensdauer. Die erfindungsgemäße Blende kann der Dachkontur durch Streckbiegen angepaßt werden und - falls erforderlich - konisch beschnitten werden. Ebenso können die Enden durch Abkantung oder durch Endkappen geschlossen werden.

Weitere vorteilhafte Ausgestaltungen der Erfindung können den Ansprüchen 7-17 entnommen werden.

Zur Veranschaulichung und näheren Erläuterung der Erfindung dient ein Ausführungsbeispiel, das in der Zeichnung dargestellt und nachstehend ausführlich beschrieben ist. Es zeigt:
Fig. 1 den rückwärtigen Bereich einer Pkw-Karosserie (teilweise), in perspektivischer Darstellung schräg von oben gesehen,
Fig. 2 einen Schnitt längs der Linie II-II, in gegenüber Fig. 1 stark vergrößerter Darstellung, und
Fig. 3 eine Teilansicht in Pfeilrichtung A (Fig. 2).

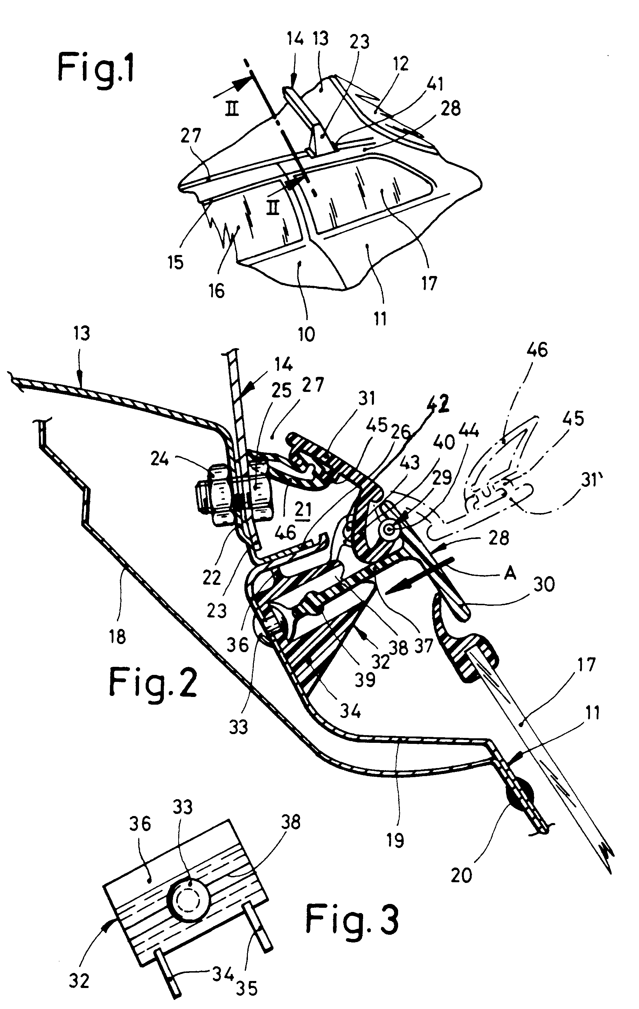

In Fig. 1 bezeichnet 10 die linke Seitentür, 11 die sich an die Seitentür 10 hinten anschließende linke Seitenwand, 12 das Heckfenster und 13 das Dach eines zweitürigen Personenkraftwagens. Am Dach 13 ist ein Dachlastträger 14 befestigt. Die Seitentür 10 bildet in ihrem oberen Bereich einen Fensterrahmen 15, in dem ein Türfenster 16 angeordnet ist. Der hintere Seitenwandbereich 11 besitzt keine Seitentür; es ist jedoch ein mit 17 beziffertes weiteres Seitenfenster vorgesehen.

Wie Fig. 2 erkennen läßt, wird das Dach 13 von einem Karosserie-Dachrahmen getragen, der von einem inneren Karosserieblech 18 und einem rinnenartig geformten äußeren Karosserieblech 19 gebildet wird. Die beiden Karosseriebleche 18, 19 sind bei 20 verschweißt und bilden dort einen von der hinteren Seitenscheibe 17 teilweise abgedeckten Bereich der Seitenwand 11.

Fig. 2 macht weiterhin deutlich, daß das Fahrzeugdach 13 am Rand zweifach abgebogen ist und durch diese Formgebung eine mit 21 bezeichnete Wasserablaufrinne bildet. Hierbei dient ein etwa vertikaler Dachflansch 22 zugleich als Befestigungsfläche für den Dachträger 14, dessen Fuß in Fig. 2 mit 23 beziffert ist. An der Innenseite des Dachflansches 22 ist zu diesem Zweck eine Mutter 24 angeschweißt, die mit einer Befestigungsschraube 25 zusammenwirkt. Der Fuß 23 des Dachlastträgers 14 ruht auf einem weiteren, schräg nach oben gerichteten Dachflansch 26, der seinerseits auf dem dort entsprechend abgebogenen äußeren Karosserieblech 19 aufliegt. Die beiden Dachflansche 22 und 26 bilden zusammen die bereits erwähnte Wasserablaufrinne 21.

Die in Fig. 2 für den Bereich der festen Fahrzeug-Seitenwand 11 gezeigten Formgebungen des Dachrahmens 18,19 und der Wasserablaufrinne 21 sind entsprechend auch im Bereich der Seitentür 10 realisiert. Fig. 1 läßt erkennen, daß Dachrahmen und Wasserablaufrinne - bis auf einen schmalen, mit 27 bezeichneten Spalt - durch den oberen horizontalen Teil des Türfensterrahmens 15 (bei geschlossener Seitentür 10) überdeckt werden. Es gilt nun, eine entsprechende Überdeckung der rinnenförmigen Partien 19, 21 auch in dem sich an die Seitentür 10 hinten anschließenden Seitenwandbereich 11 vorzusehen. Fig. 2 läßt die hierzu im einzelnen getroffenen Maßnahmen erkennen. Diese bestehen im wesentlichen in einer insgesamt mit 28 bezeichneten Blende, die sich aus zwei durch ein Gelenk 29 miteinander verbundenen Teilen, einem unteren Profilteil 30 und einem oberen Profilteil 31, zusammensetzt. Die Blende 28 ist mittels des unteren Profilteils 30 am Dachrahmenblech 19 verankert. Hierzu sind mehrere aus Kunststoff oder kunststoffbeschichtetem Federstahl bestehende Befestigungsklipse 32 vorgesehen (siehe auch Fig. 3), die jeweils mittels eines Niets 33 am Dachträgerblech 19 fixiert sind. Zwei einseitig angeformte dreieckförmige Abstützstreben 34, 35 sorgen für einen festen Halt jedes Befestigungsklips 32. Auf der anderen Seite jedes Befestigungsklips 32 ist eine Abstandslippe 36 angeformt, die zugleich ein Widerlager für den Dachblechflansch 26 bildet, auf dem sich der Fuß 23 des Dachlastträgers 14 abstützt.

An dem unteren Profilteil 30 der Blende 28 ist ein Befestigungsflansch 37 einteilig angeformt, der in eine schlitzförmige Ausnehmung 38 jedes Befestigungsklips 32 eingreift. Eine am Befestigungsflansch 37 ausgebildete konische Verdickung 39 gewährleistet die erforderliche Fixierung des Befestigungsflansches 37 und damit der Blende 28 in den Befestigungsklipsen 32. Damit bildet das untere Profilteil 30 den karosseriefesten Teil der Blende 28, wohingegen das obere Profilteil 31 aus seiner in Fig. 2 in ausgezogenen Linien dargestellten Schließstellung um die Gelenkachse 29 klappenartig in eine (strichpunktiert angedeutete) Öffnungsstellung 31′ verschwenkbar ist.

Die Blende 28 selbst (bzw. deren Profilteile 30, 31) besteht zweckmäßigerweise aus einem stranggepreßten Aluminiumprofil, kann aber ebensogut auch aus extrudiertem formstabilem oder metallverstärktem Kunststoff hergestellt sein. Eine geeignete Farbgebung (entsprechend der Karosserielackierung) kann durch außenseitige Lackierung oder - falls die Blende 28 aus Kunststoff besteht - durch Einfärbung des Kunststoffmaterials erfolgen.

Fig. 2 macht weiterhin deutlich, daß das Gelenk 29 an der Innenseite des unteren Profilteils 30 angeordnet ist und das obere Profilteil 31 mit einem an dessen Innenseite angeformten, bogenförmig gekrümmten Gelenkarm 40 scharnierartig an dem Gelenk 29 angreift. Hierdurch wird einmal die bereits erwähnte weite Öffnungsstellung 31′ des oberen Profilteils 31 bei zugleich nahezu spaltfreiem Aneinanderliegen der beiden Profilteile 30, 31 (in der Schließstellung des oberen Profilteils 31) ermöglicht. Andererseits bleibt das scharnierartige Gelenk 29 - sowohl in Schließstellung wie auch in Öffnungsstellung des oberen Profilteils 31 - von außen unsichtbar.

Nun handelt es sich bei der mit 31′ bezeichneten Öffnungsstellung um eine Position, die das obere Profilteil 31 nur einnimmt, um die Montage des Dachlastträgers 14 zu ermöglichen. In der Regel befindet sich das obere Profilteil 31 also in Schließstellung. (Wie Fig. 1 zeigt, ist im oberen Profilteil 31 eine Aussparung 41 vorgesehen, damit der Fuß 23 das Dachlastträgers 14 keine Behinderung für die Schließstellung des oberen Profilteils 31 bilden kann.) Es ist daher erforderlich, für eine einwandfreie Arretierung des oberen Profilteils 31 in seiner Schließstellung zu sorgen. Hierzu ist innenseitig an dem oberen Profilteil 31, am Gelenkarm 40 desselben, jewei ein Nocken 42 angeformt, der jeweils mit einer am Befestigungsklips 32 angeformten elastischen Gegenrast 43 zusammenwirkt. Da die Gegenrast 43 elastisch verformbar ist, kann die durch Nocken 42 und Gegenrast 43 bewirkte Arretierung durch entsprechende, in Öffnungsrichtung des oberen Profilteils 31 gerichtete Kraftaufwendung überwunden werden.

Das die beiden Profilteile 30, 31 verbindende Gelenk 29 besitzt eine Scharnierachse, die wechselweise aus dem oberen Profilteil 31 und dem unteren Profilteil 30 ausklinkbar ist, derart, daß ein Scharnierbolzen 44 eingesetzt werden kann.

Eine weitere Besonderheit der Erfindung besteht darin, daß an der Innenseite des oberen Profilteils 31 eine im Querschnitt C-förmige Aufnahme 45 angeformt ist, in der eine elastische Dichtleiste 46 angeordnet ist, die mit dem Dachrahmen 22 in Schließstellung des oberen Profilteils 31 zusammenwirkt. Auftreffendes Regenwasser wird also in Schließstellung des oberen Profilteils 31 großenteils bereits durch die Dichtleiste 46 abgeleitet.

## Patentansprüche

1. Blende (28) zur Verkleidung des Karosserie-Dachrahmens (18, 19, 22) von Kraftfahrzeugen in sich an Seitentüren (10) anschließenden, keine Seitentüren (10) aufweisenden Seitenwandbereichen (11), wobei Fensterrahmen (15) der Seitentüren zugeordnete Teile des Karosserie-Dachrahmens (18, 19, 22) abdeckend übergreifen, dadurch gekennzeichnet, daß die Blende (28) aus zwei durch ein Gelenk (29) miteinander verbundenen Teilen (30, 31), einem unteren (30) und einem oberen Profilteil (31), besteht, wobei die Gelenkachse (44) parallel zur Längserstreckung des Karosserie-Dachrahmens (18, 19, 22) verläuft,und daß das obere Profilteil (31) klappenartig gegenüber dem unteren Profilteil (30) schwenkbar ist.

2. Blende nach Anspruch 1,
dadurch gekennzeichnet, daß an die insgesamt als Abdeckprofil ausgebildete Blende (28) innenseitig, etwa im rechten Winkel zur Blendenfläche, ein Befestigungsflansch (37) einteilig angeformt ist, der mit am Karosserie-Dachrahmen (19) angeordneten Befestigungsklipsen (32) zusammenwirkt.

3. Blende nach Anspruch 1 oder 2,
dadurch gekennzeichnet, daß der Befestigungsflansch (37) am unteren Profilteil (30) angreift bzw. angeformt ist.

4. Blende nach Anspruch 1, 2 oder 3,
dadurch gekennzeichnet, daß dieselbe, einschließlich Befestigungsflansch (37), als Strangpreß-Profil aus Aluminium ausgebildet ist oder aus einem gerollten Profil besteht.

5. Blende nach Anspruch 1, 2 oder 3,
dadurch gekennzeichnet, daß dieselbe, einschließlich Befestigungsflansch (37), aus extrudiertem, formstabilem Kunststoff besteht.

6. Blende nach Anspruch 1, 2 oder 3,
dadurch gekennzeichnet, daß dieselbe, einschließlich Befestigungsflansch (37), aus metallverstärktem Kunststoff besteht.

7. Blende nach einem oder mehreren der vorstehenden Ansprüche,
dadurch gekennzeichnet, daß dieselbe außenseitig entsprechend der Karosserie-Lackierung lackiert ist.

8. Blende nach Anspruch 5 oder 6,
dadurch gekennzeichnet, daß dieselbe aus entsprechend der Karosserie-Lackierung eingefärbtem Kunststoff besteht.

9. Blende nach einem oder mehreren der vorstehenden Ansprüche,
dadurch gekennzeichnet, daß der Befestigungsflansch (37) in seinem in die Befestigungsklipse (32) eingreifenden Bereich eine im Querschnitt konische Verdickung (39) aufweist.

10. Blende nach einem oder mehreren der vorstehenden Ansprüche, insbesondere nach Anspruch 2 und 9,
dadurch gekennzeichnet, daß die Befestigungsklipse (32) an einem Außenblech (19) des Dachrahmens (18, 19, 22), unterhalb einer am Dachrahmen ausgebildeten Wasserablaufrinne (21), vernietet sind (bei 33) und eine schlitzförmige Öffnung (38) zur Aufnahme des Befestigungsflansches (37) aufweisen.

11. Blende nach Anspruch 10,
dadurch gekennzeichnet, daß jeder Befestigungsklips (32) aus elastischem Kunststoff-Material besteht.

12. Blende nach Anspruch 10,
dadurch gekennzeichnet, daß der Befestigungsklips (32) aus kunststoffbeschichtetem Federstahl besteht.

13. Blende nach einem oder mehreren der vorstehenden Ansprüche, dadurch gekennzeichnet, daß das Gelenk (29) an der Innenseite des unteren Profilteils (30) angeordnet ist und das obere Profilteil (31) mit einem an dessen Innenseite angeformten, bogenförmig gekrümmten Gelenkarm (40) scharnierartig an dem Gelenk (29) angreift.

14. Blende nach einem oder mehreren der vorstehenden Ansprüche, dadurch gekennzeichnet, daß innenseitig an dem oberen Profilteil (31), vorzugsweise am Gelenkarm (40) desselben, jeweils ein Nocken (42) angeformt ist, der mit einer am Befestigungsklips (32) angeformten elastischen Gegenrast (43) zusammenwirkt, derart, daß das obere Profilteil (31) in seiner Schließstellung durch den Nocken (42) und die Gegenrast (43) arretiert ist.

15. Blende nach einem oder mehreren der vorstehenden Ansprüche, für Kraftfahrzeuge mit einem Karosserie-Dachrahmen, an dem ein Dachlastträger befestigbar ist,
dadurch gekennzeichnet, daß das obere Profilteil (31) nach Überwindung des Widerstandes von Nocken (42) und Gegenrast (43) in eine Öffnungsstellung (31′) etwa rechtwinklig zum unteren Profilteil (30) wegklappbar ist, derart, daß der Befestigungspunkt (25) des Dachlastträgers (14) am Karosserie-Dachrahmen (22) freigegeben wird.

16. Blende nach einem oder mehreren der vorstehenden Ansprüche, gekennzeichnet durch eine Scharnierachse, die wechselweise aus dem oberen (31) und dem unteren Profilteil (30) (30) ausklinkbar ist, derart, daß ein Scharnierbolzen (44) eingesetzt werden kann.

17. Blende nach einem oder mehreren der vorstehenden Ansprüche, dadurch gekennzeichnet, daß an der Innenseite des oberen Profilteils (31) eine im Querschnitt C-förmige Aufnahme (45) angeformt ist, in der eine elastische Dichtleiste (46) angeordnet ist, die mit dem Dachrahmen (22) in Schließstellung des oberen Profilteils (31) zusammenwirkt.

## Claims

1. Screen (28) for covering the body-roof frame (18, 19,22) of motor vehicles in side wall areas (11), having no side doors (10), which connect to side doors (10), in which window frames (15) of the side doors engage in a covering fashion with associated parts of the body-roof frame (18, 19, 22), **characterised** in that the screen (28) consists of two parts (30, 31) interconnected through a joint (29), a lower (30) and an upper profile part (31), in which the swivel axis (44) runs parallel to the longitudinal direction of the body-roof frame (18, 19, 22) and that the upper profile part (31) pivots with respect to the lower profile part (30).

2. Screen according to claim 1, **characterised** in that to the inside of the screen (28), which as a whole is constructed as a cover profile, approximately at right angles to the screen surface in one piece is moulded a securing flange (37) which cooperates with fastening clips (32) arranged on the body-roof frame (19).

3. Screen according to claim 1 or 2, **characterised** in that the securing flange (37) engages with or is moulded to the lower profile part (30).

4. Screen according to claim 1, 2 or 3, **characterised** in that the screen, inclusive of the securing flange (37), is constructed as an aluminium extrusion-moulded profile or a rolled profile.

5. Screen according to claim 1, 2 or 3, **characterised** in that the screen, inclusive of the securing flange (37), consists of an extruded, dimensionally stable synthetic material.

6. Screen according to claim 1, 2 or 3, **characterised** in that the screen, inclusive of the securing flange (37), consists of a metal-reinforced synthetic material.

7. Screen according to one or more of the preceding claims, **characterised** in that the screen is painted on the outside to correspond to the paint on the body.

8. Screen according to claim 5 or 6, **characterised** in that the screen consists of a synthetic material coloured to correspond to the paint of the body.

9. Screen according to one or more of the preceding claims, **characterised** in that the securing flange (37) has a cross-sectional conical expansion (39) in its area engaging the fastening clip (32).

10. Screen according to one or more of the preceding claims, especially according to claim 2 and 9, **characterised** in that the fastening clips (32) are riveted at (33) to an outer sheet (19) of the roof frame (18, 19, 22) beneath a water drainage channel (21) arranged on the roof frame, and a slot-like opening (38) for receiving the securing flange (37).

11. Screen according to claim 10, **characterised** in that each fastening clip (32) is made from an elastic synthetic material.

12. Screen according to claim 10, **characterised** in that the fastening clip (32) is made from a plastics-coated spring steel.

13. Screen according to one or more of he preceding claims, **characterised** in that the joint (29) is arranged on the inside of the lower profile part (30) and the upper profile part (31) engages the joint in a hinge-like manner with a curved swivel arm (40) moulded to the inside of the upper profile part (31).

14. Screen according to one or more of the preceding claims, **characterised** in that on the inside of the upper profile part (31), preferably on the swivel arm (40) of the same, there is moulded a cam (42) which cooperates with an elastic counter notch (43) moulded onto the fastening clip (32) in such a way that the upper profile part (31) in its locked position is secured by the cam (42) and the counter notch (43).

15. Screen according to one or more of the preceding claims for motor vehicles with a body-roof frame to which is fixed a roof rack support, **characterised** in that the upper profile part (31), after overcoming the resistance of cam (42) and counter notch (43), can be folded away into an opening position (31′) approximately at right angles to the lower profile part (30) in such a way that the securing point (25) of the roof rack support (14) on the body-roof frame (22) is released.

16. Screen according to one or more of the preceding claims, **characterised** by a hinge axis which can be alternately disengaged from the upper (31) and the lower profile part (30) in such a way that a hinge pin can be employed.

17. Screen according to one or more of the preceding claims, **characterised** in that to the inside of the upper profile part (31) is moulded a receiver (45) which is C-shaped in diameter in which is arranged an elastic sealing strip (46) which cooperates with the roof frame (22) when the upper profile part (31) is in the locked position.

## Revendications

1. Garniture (28) d'habillage du cadre de toit (18, 19, 22) de la carosserie de véhicules automobiles dans des zones de paroi latérales (11) se raccordant à des portes latérales (10) mais ne présentant pas de portes latérales (10), le cadre de fenêtre (15) des portes latérales recouvrant des parties associées du cadre de toit (18, 19, 22), caractérisée en ce que la garniture (28) est constituée de deux parties (30, 31) reliées entre elles par une articulation (29), à savoir une partie profilée inférieure (30) et une partie profilée supérieure (31), l'axe d'articulation (44) s'étendant parallèlement à la direction longitudinale du cadre de toit (18, 19, 22) et en ce que la partie profilée supérieure (31) peut pivoter par rapport à la partie profilée inférieure (30) à la manière d'un abattant.

2. Garniture selon la revendication 1, caractérisée en ce qu'une aile de fixation (37) est moulée d'une pièce sur le côté intérieur de la garniture (28) réalisée globalement sous forme de profilé de recouvrement, sensiblement à angle droit par rapport à la surface de la garniture, laquelle aile coopère avec des clips de fixation (32) disposés sur le cadre de toit (19).

3. Garniture selon la revendication 1 ou 2, caractérisée en ce que l'aile de fixation (37) agit et est moulée sur la partie profilée inférieure (30).

4. Garniture selon la revendication 1, 2 ou 3, caractérisée en ce que ladite garniture, y compris l'aile de fixation (37), est réalisée sous forme de profilé extrudé en aluminium ou est constituée par un profilé roulé.

5. Garniture selon la revendication 1, 2 ou 3, caractérisée en ce que ladite garniture, y compris l'aile de fixation (37), est constituée de matière plastique extrudée présentant une stabilité dimensionnelle.

6. Garniture selon la revendication 1, 2 ou 3, caractérisée en ce que ladite garniture, y compris l'aile de fixation (37), est constituée de matière plastique renforcée avec du métal.

7. Garniture selon l'une ou plusieurs des revendications précédentes, caractérisée en ce que ladite garniture est peinte à l'extérieur comme la carosserie.

8. Garniture selon la revendication 5 ou 6, caractérisée en ce que ladite garniture est constituée d'une matière plastique teinte de la même couleur que la carosserie.

9. Garniture selon l'une ou plusieurs des revendications précédentes, caractérisée en ce que l'aile de fixation (37) présente un épaississement (39) de section transversale conique dans sa zone qui s'engage dans les clips de fixation (32).

10. Garniture selon l'une ou plusieurs des revendications précédentes, en particulier selon les revendications 2 et 9, caractérisée en ce que les clips de fixation (32) sont rivés (en 33) sur une tôle extérieure (19) du cadre de toit (18, 19, 22), sous une gouttière d'écoulement d'eau (21) réalisée sur le cadre de toit et présentent une ouverture (38) en forme de fente pour recevoir l'aile de fixation (37).

11. Garniture selon la revendication 10, caractérisée en ce que chaque clip de fixation (32) est constitué de matière plastique élastique.

12. Garniture selon la revendication 10, caractérisée en ce que le clip de fixation (32) est en acier à ressort revêtu de matière plastique.

13. Garniture selon l'une ou plusieurs des revendications précédentes, caractérisée en ce que l'articulation (29) est disposée sur le côté intérieur de la partie profilée inférieure (30) et la partie profilée supérieure (31) agit sur l'articulation à la manière d'une charnière, avec un bras articulé (40) courbé en forme d'arc formé sur le côté intérieur de ladite partie profilée.

14. Garniture se!on l'une ou plusieurs des revendications précédentes, caractérisée en ce qu'une saillie (42) est formée sur le côté intérieur de la partie profilée supérieure (31), de préférence sur le bras articulé (40) de ladite partie profilée, laquelle saillie coopère avec une contre-encoche (43) élastique formée sur le clip de fixation (32) de telle manière que la partie profilée supérieure (31) soit bloquée dans sa position de fermeture par la saillie (42) et la contre-encoche (43).

15. Garniture selon l'une ou plusieurs des revendications précédentes, pour véhicules automobiles avec un cadre de toit sur lequel peut être fixée une galerie, caractérisée en ce que la partie profilée supérieure (31) peut, après avoir dépassé la résistance de la saillie (42) et de la contre-encoche (43), être repliée dans une position d'ouverture (31′), à peu près à angle droit par rapport à la partie profilée inférieure (30) de telle manière que le point de fixation (25) de la galerie (14) soit libéré sur le cadre de toit (22).

16. Garniture selon l'une ou plusieurs des revendications précédentes, caractérisée par un axe de charnière qui peut au choix être sorti de la partie profilée supérieure (31) et de la partie profilée inférieure (30) de telle manière qu'un boulon de charnière (44) puisse être mis en place.

17. Garniture selon l'une ou plusieurs des revendications précédentes, caractérisée en ce qu'un logement (45) de section transversale en C est formé sur le côté intérieur de la partie profilée supérieure (31), logement dans lequel est disposée une baguette d'étanchéité (46) élastique qui coopère avec le cadre de toit (22) lorsque la partie profilée supérieure (31) est en position de fermeture.
